# EUROPÄISCHE PATENTSCHRIFT

(11) **EP 1 382 485 B1**
(45) Veröffentlichungstag und Bekanntmachung des Hinweises auf die Patenterteilung: **14.07.2010**
(21) Anmeldenummer: 03010027.5
(22) Anmeldetag: 02.05.2003
(51) Int. Cl.: B60N 3/08

(54) **Ascher oder dgl. Behältnis**
Ashtray or the like receptable
Cendrier ou analogue récipient

(30) Priorität: 18.07.2002 DE 10232600
(43) Veröffentlichungstag der Anmeldung: 21.01.2004
(73) Patentinhaber: Dr. Ing. h.c. F. Porsche AG, 70435 Stuttgart (DE)
(72) Erfinder: Pandura, Michael, 74189 Weinsberg (DE)

(56) Entgegenhaltungen:
- DE-A- 4 427 868
- US-A- 4 799 604

## Beschreibung

Die Erfindung betrifft einen Ascher oder dgl. Behältnis, insbesondere für Fahrzeuge, mit einem Aufnahmegehäuse und einer im Aufnahmegehäuse herausnehmbar eingesetzten Behälterschale, wobei zum Anheben der Behälterschale von einer Gebrauchslage in eine griffgünstige Entnahmeposition eine Aushebemechanik vorgesehen ist, die ein am Aufnahmegehäuse verschiebbar gelagertes Betätigungselement und ein mit diesem zusammenwirkendes Übertragungselement umfaßt.

Aus der DE 44 27 868 C2 ist ein Ascher für Fahrzeuge bekannt, wobei die herausnehmbar im Aufnahmegehäuse eingesetzte Behälterschale mittels einer Aushebemechanik von einer Gebrauchslage in eine griffgünstige Entnahmeposition verlagerbar ist.

Die Aushebemechanik umfaßt bei dieser Anordnung ein am Aufnahmegehäuse verschiebbar gelagertes Betätigungselement, das mit einem durch einen Schieber gebildeten Übertragungselement in Wirkverbindung steht. An einem Ende des Schiebers ist eine Schrägfläche vorgesehen, die durch Verschieben des Schiebers in Kontakt mit einer korrespondierenden schrägverlaufenden Angriffsfläche der Behälterschale gelangt.

Aufgabe der Erfindung ist es, eine alternative Aushebemechanik für eine herausnehmbare Behälterschale eines Aschers zu schaffen, die einen einfachen, kostengünstigen Aufbau aufweist.

Diese Aufgabe wird erfindungsgemäß durch die Merkmale des Anspruchs 1 gelöst. Weitere die Erfindung in vorteilhafter Weise ausgestaltende Merkmale enthalten die Unteransprüche.

Die mit der Erfindung hauptsächlich erzielten Vorteile sind darin zu sehen, daß die aus einem Betätigungselement, einem Übertragungselement und einem Schwenkhebel gebildete Aushebemechanik einen einfachen, kostengünstigen Aufbau aufweist. Das Übertragungselement kann als Hebel, als Gestänge, als Schieber oder dgl. ausgebildet sein. Der relativ kurze Schwenkhebel ist an seinem unteren Endbereich an einer vertikalen Wand des Aufnahmegehäuses drehbar gelagert. Mit Abstand zu dieser Anlenkung greift ein dem Betätigungselement abgewandter Bereich des Übertragungselementes am Schwenkhebel an. Zur exakten Führung des Schwenkhebels ist an diesem ein vorstehender Zapfen angeordnet, der mit einer kreisbogenförmigen Schlitzöffnung des Aufnahmegehäuses in Wirkverbindung steht. Durch die nockenförmige Ausbildung des oberen Randbereiches des Schwenkhebels wird ein einfaches Anheben der Behälterschale erzielt.

Ein Ausführungsbeispiel der Erfindung wird im folgenden näher erläutert.
Es zeigen
- Fig. 1: eine Seitenansicht auf einen Ascher mit ausgefahrenem Aufnahmegehäuse und einer eingesetzten Behälterschale in Gebrauchslage,
- Fig. 2: eine Ansicht ähnlich Fig. 1 mit der Behälterschale in der angehobenen griffgünstigen Entnahmeposition,
- Fig. 3: eine perspektivische Ansicht auf die Aushebemechanik in Gebrauchslage der Behälterschale,
- Fig. 4: eine Ansicht auf die Aushebemechanik in der Entnahmeposition der Behälterschale.
- Fig. 5: eine Ansicht auf eine zweite Ausführungsform einer Aushebemechanik und
- Fig. 6: einen Schnitt durch den Randbereich der Behälterschale und die darunterliegende Aushebemechanik.

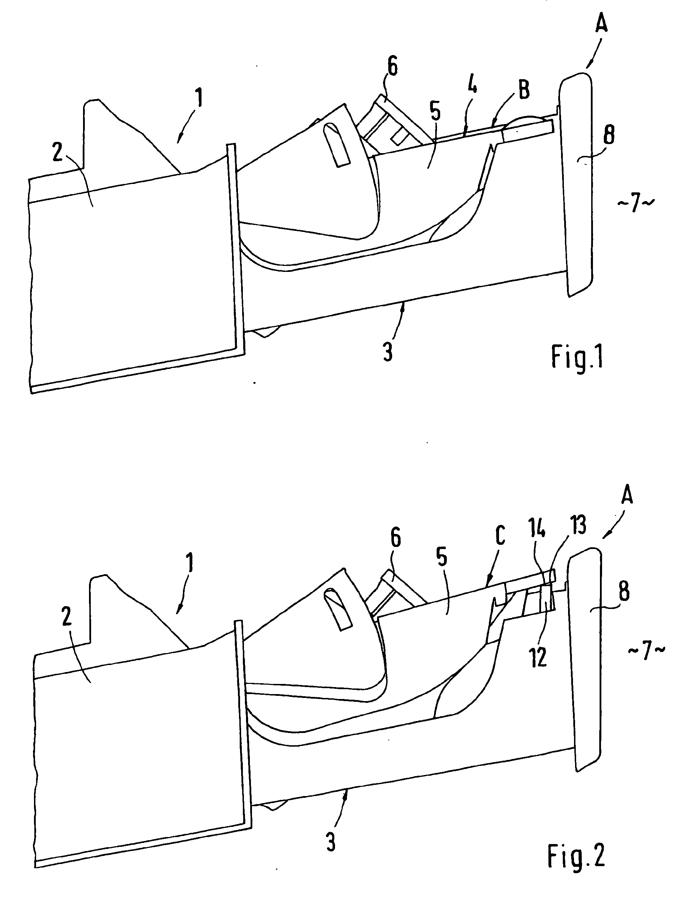

In den Fig. 1 bis 4 ist ein im Armaturenbrett oder an einer Konsole eines Fahrzeuges angeordneter Ascher 1 dargestellt, der sich aus einem aufbauseitig befestigten Gehäuse 2 und einem im Gehäuse 2 schubladenartig geführten Aschereinsatz 3 zusammensetzt. Der durch ein Spritzgußteil aus Kunststoff gebildete Aschereinsatz 3 ist über nicht näher gezeigte seitliche Führungen von einer nicht näher dargestellten Schließstellung in eine ausgefahrene Stellung A gem. den Fig. 1 bis 4 verlagerbar und umgekehrt. Der Aschereinsatz 3 umfaßt ein Aufnahmegehäuse 4, in das von oben bzw. von der Seite her eine herausnehmbare Behälterschale 5 einsetzbar ist. Seitlich neben der Behälterschale 5 ist ein Zigarettenanzünder 6 vorgesehen. Zum Fahrgastraum 7 hin ist das Aufnahmegehäuse 3 mit einer dekorativen Blende 8 versehen.

Zum Anheben der Behälterschale 5 von einer Gebrauchslage B (Fig. 1) in eine griffgünstige Entnahmeposition C (Fig. 2) ist eine Aushebemechanik 9 vorgesehen, die sich aus einem am Aufnahmegehäuse 4 verschiebbar gelagerten Betätigungselement 10, einem Übertragungselement 11 und einem Schwenkhebel 12 zusammensetzt.

Die Aushebemechanik 9 funktioniert derart, daß beim Verschieben des Betätigungselementes 10 in Pfeilrichtung R (in Fahrzeugquerrichtung) der Schwenkhebel 12 eine kreisbogenförmige Bewegung ausübt, in deren Verlauf der gerundete obere Endbereich 13 des Schwenkhebels 12 in Kontakt mit der Unterseite 14 der Behälterschale 5 gelangt und diese nach oben hin in die griffgünstige Entnahmeposition C bewegt. Das Betätigungselement 10 ist seitlich neben der Behälterschale 5 angeordnet und zwar dem Zigarettenanzünder 6 vorgelagert. An einer ebenen, etwa horizontalen Wandung 15 des Aufnahmegehäuses 4 ist eine geradlinige querverlaufende Schlitzöffnung 16 ausgebildet, die zur Führung des Betätigungselementes 10 während der Verschiebebewegung dient. Das Betätigungselement 10 durchdringt die Schlitzöffnung 16 und erstreckt sich sowohl oberhalb als auch unterhalb der Wandung 15. Der unterhalb der Wandung 15 verlaufende Bereich des Betätigungselementes 10 ist mit dem dem Schwenkhebel 12 abgekehrten Ende des Übertragungselementes 11 verbunden.

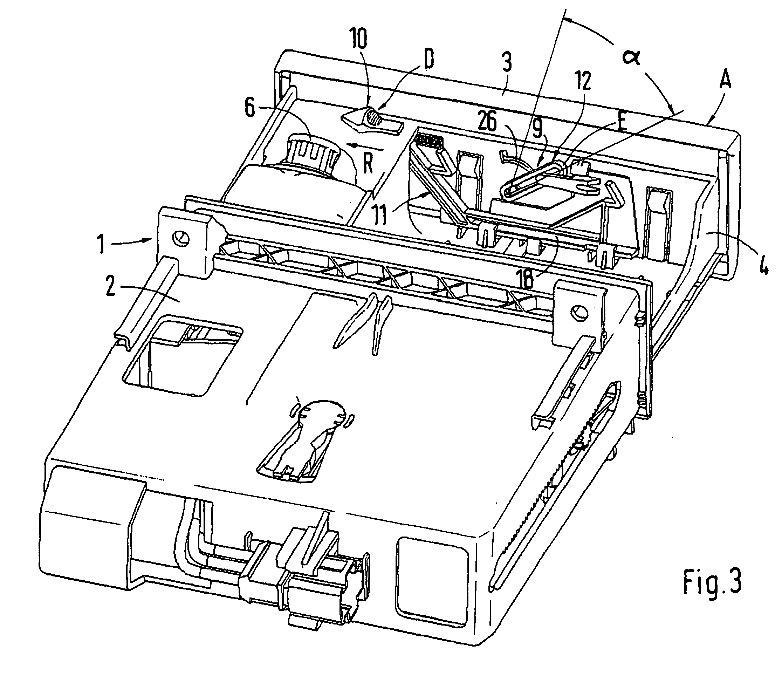

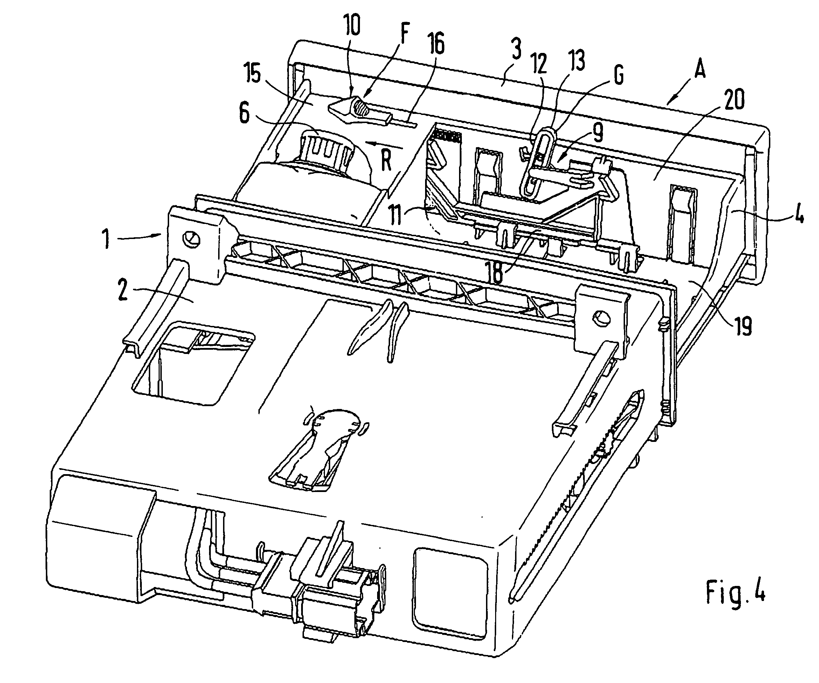

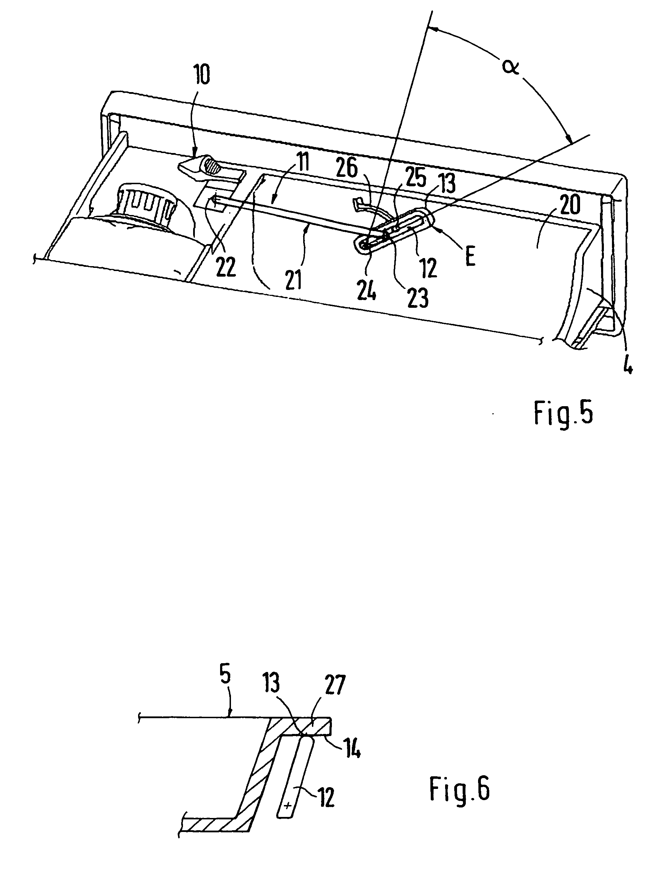

In der Gebrauchslage B der Behälterschale 5 nimmt das Betätigungselement 10 die Position D ein. In den Fig. 3 und 4 ist das Übertragungselement 11 als Schieber 18 ausgebildet, der an einer Bodenwand 19 und der vertikalen vorderen Wand 20 des Aufnahmegehäuses 4 in Querrichtung verschiebbar geführt ist. Das Übertragungselement 11 kann jedoch auch als Hebel 21,.als Stange oder dgl. ausgebildet sein. Ein einfach ausgebildetes Übertragungselement 11 ist in Fig. 5 dargestellt. Ein Ende 22 des Hebels 21 ist dabei gelenkig mit dem Betätigungselement 10 verbunden, wogegen das andere Ende 23 direkt mit dem Schwenkhebel 12 in Wirkverbindung steht. Der sich in aufrechter Richtung erstreckende Schwenkhebel 12 ist mit seinem unteren Endbereich 24 um eine in Fahrzeuglängsrichtung verlaufende Achse mit der Innenseite der aufrechten Wand 20 des Aufnahmegehäuses 4 verbunden. Mit Abstand zu seiner aufnahmegehäuseseitigen Anlenkung ist der Schwenkhebel 12 gelenkig mit dem darüberliegend angeordneten Übertragungselement 11 verbunden. Der obere Randbereich 13 des Schwenkhebels 12 weist eine gerundete Form auf. Vorzugsweise ist er nockenförmig ausgebildet, um eine gute Kraftübertragung zu gewährleisten. Zur exakten Führung des Schwenkhebels 12 während seiner Schwenkbewegung weist dieser örtlich einen vorstehenden Zapfen 25 auf, der mit einer an der aufrechten Wand 20 des Aufnahmegehäuses 4 ausgebildeten kreisbogenförmigen Schlitzöffnung 26 in Eingriff steht. In der Gebrauchslage B der Behälterschale 5 nimmt der Schwenkhebel 12 die Stellung E ein (Fig. 1 und 3). Dabei verläuft der obere Randbereich 13 des Schwenkhebels 12 mit geringem Abstand zum darüberliegend seitlich abgestellten Randflansch 27 der Behälterschale 5. Das Betätigungselement befindet sich in Stellung D.

Zum Anheben der Behälterschale 5 wird das Betätigungselement 10 in Fahrzeugquerrichtung in Pfeilrichtung R bis in die Stellung F bewegt (Fig. 4). Dadurch übt das Übertragungselement 11 ebenfalls eine Längsbewegung in Pfeilrichtung R aus und der Schwenkhebel 12 wird um den Winkel α entgegen dem Uhrzeigersinn verschwenkt in eine Stellung G (Fig. 4). Der obere Randbereich 13 gelangt während des kreisbogenförmigen Verschwenkens um den Winkel α in Kontakt mit der Unterseite 14 des Randflansches 27 der Behälterschale 5 und hebt diese um einen definierten Betrag in die Entnahmeposition C an (Fig. 2).

## Patentansprüche

1. Ascher oder dgl. Behältnis, insbesondere für Fahrzeuge, mit einem Aufnahmegehäuse (4) und einer im Aufnahmegehäuse (4) herausnehmbar eingesetzten Behälterschale (5), wobei zum Anheben der Behälterschale (5) von einer Gebrauchslage (B) in eine griffgünstige Entnahmeposition (C) eine Aushebemechanik (9) vorgesehen ist, die ein am Aufnahmegehäuse (4) verschiebbar gelagertes Betätigungselement (10) und ein mit diesem zusammenwirkendes Ubertragungselement (11) umfaßt, **dadurch gekennzeichnet, daß** das Übertragungselement (11) mit einem am Aufnahmegehäuse (4) drehbar gelagerten Schwenkhebel (12) in Wirkverbindung steht, dergestalt, daß beim Verschieben des Betätigungselementes (10) der Schwenkhebel (12) eine kreisbogenförmige Bewegung ausübt, in deren Verlauf der gerundete obere Endbereich (13) des Schwenkhebels (12) in Kontakt mit der Unterseite (14) der Behälterschale (5) gelangt und diese nach oben hin in die griffgünstige Entnahmeposition (C) bewegt.

2. Ascher nach Anspruch 1, **dadurch gekennzeichnet, daß** der Schwenkhebel (12) an seinem unteren Endbereich (24) drehbar mit dem Aufnahmegehäuse (4) verbunden ist.

3. Ascher nach Anspruch 1, **dadurch gekennzeichnet, daß** der Schwenkhebel (12) entfernt von seiner aufnahmegehäuseseitigen Anlenkung gelenkig mit dem Übertragungselement (11) verbunden ist.

4. Ascher nach Anspruch 1, **dadurch gekennzeichnet, daß** das Übertragungselement (11) durch einen Hebel (21), ein Gestänge, einen Schieber (18) oder dgl. gebildet ist.

5. Ascher nach Anspruch 1, **dadurch gekennzeichnet, daß** der obere Endbereich (13) des Schwenkhebels (12) nockenförmig ausgebildet ist.

6. Ascher nach Anspruch 1, **dadurch gekennzeichnet, daß** der obere Endbereich (13) des Schwenkhebels (12) beim Anheben mit der Unterseite (14) eines seitlich abgestellten randseitigen Flansches (27) der Behälterschale (5) zusammenwirkt.

7. Ascher nach Anspruch 1, **dadurch gekennzeichnet, daß** der Schwenkhebel (12) örtlich einen vorstehenden Zapfen (25) aufweist, der mit einer am Aufnahmegehäuse (4) ausgebildeten kreisbogenförmigen Schlitzöffnung (26) zusammenwirkt.

## Claims

1. Ash tray or similar receptacle, in particular for vehicles, with a receiving housing (4) and a container shell (5) which is inserted removably in the receiving housing (4), wherein a lifting mechanism (9) is provided for lifting the container shell (5) from a use position (B) into a graspable removal position (C), said lifting mechanism comprising an actuating element (10) mounted displaceably on the receiving housing (4) and a transmission element (11) interacting with said actuating element, **characterized in that** the transmission element (11) is operatively connected to a pivot lever (12), which is mounted rotatably on the receiving housing (4), in such a manner that, when the actuating element (10) is displaced, the pivot lever (12) executes a movement in the shape of an arc of a circle in the course of which the rounded upper end region (13) of the pivot lever (12) enters into contact with the lower side (14) of the container shell (5) and moves the latter upwards into the graspable removal position (C).

2. Ash tray according to Claim 1, **characterized in that** the lower end region (24) of the pivot lever (12) is connected rotatably to the receiving housing (4).

3. Ash tray according to Claim 1, **characterized in that** the pivot lever (12), away from the pivot point thereof on the receiving-housing side, is connected in an articulated manner to the transmission element (11).

4. Ash tray according to Claim 1, **characterized in that** the transmission element (11) is formed by a lever (21), a linkage, a slide (18) or the like.

5. Ash tray according to Claim 1, **characterized in that** the upper end region (13) of the pivot lever (12) is of cam-shaped design.

6. Ash tray according to Claim 1, **characterized in that**, during the lifting operation, the upper end region (13) of the pivot lever (12) interacts with the lower side (14) of a laterally bent edge flange (27) of the container shell (5).

7. Ash tray according to Claim 1, **characterized in that** the pivot lever (12) locally has a protruding pin (25) which interacts with a slot opening (26) which is formed on the receiving housing (4) and is in the shape of an arc of a circle.

## Revendications

1. Cendrier ou récipient analogue, notamment pour véhicules, comprenant un boîtier de réception (4) et une coque de récipient (5) insérée de manière amovible dans le boîtier de réception (4), un mécanisme de levage (9) étant prévu pour soulever la coque de récipient (5) d'une position d'utilisation (B) dans une position de prélèvement (C) favorisant la préhension, lequel comprend un élément d'actionnement (10) monté de manière déplaçable sur le boîtier de réception (4) et un élément de transfert (11) coopérant avec lui, **caractérisé en ce que** l'élément de transfert (11) est en liaison fonctionnelle avec un levier pivotant (12) monté à rotation sur le boîtier de réception (4), de telle sorte que lors du déplacement de l'élément d'actionnement (10), le levier pivotant (12) exerce un mouvement en forme d'arc de cercle, au cours duquel la région d'extrémité supérieure arrondie (13) du levier pivotant (12) parvient en contact avec le côté inférieur (14) de la coque de récipient (5) et la déplace vers le haut dans la position de prélèvement (C) favorisant la préhension.

2. Cendrier selon la revendication 1, **caractérisé en ce que** le levier pivotant (12) est connecté au niveau de sa région d'extrémité inférieure (24) de manière rotative au boîtier de réception (4).

3. Cendrier selon la revendication 1, **caractérisé en ce que** le levier pivotant (12) est connecté de manière articulée à l'élément de transfert (11) à distance de son articulation du côté du boîtier de réception.

4. Cendrier selon la revendication 1, **caractérisé en ce que** l'élément de transfert (11) est formé par un levier (21), une tringle, un coulisseau (18) ou similaire.

5. Cendrier selon la revendication 1, **caractérisé en ce que** la région d'extrémité supérieure (13) du levier pivotant (12) est réalisée en forme de came.

6. Cendrier selon la revendication 1, **caractérisé en ce que** la région d'extrémité supérieure (13) du levier pivotant (12) coopère lors du soulèvement avec le côté inférieur (14) d'une bride (27), inclinée latéralement au niveau du bord, de la coque de récipient (5).

7. Cendrier selon la revendication 1, **caractérisé en ce que** le levier pivotant (12) présente localement un tourillon saillant (25), qui coopère avec une ouverture de fente (26) en forme d'arc de cercle réalisée sur le boîtier de réception (4).
